Europäisches Patentamt

European Patent Office

Office européen des brevets

(19)

(11) **EP 1 141 896 B1**

(12) **FASCICULE DE BREVET EUROPEEN**

(45) Date de publication et mention de la délivrance du brevet:
**09.04.2003 Bulletin 2003/15**

(21) Numéro de dépôt: **00900589.3**

(22) Date de dépôt: **14.01.2000**

(51) Int Cl.[7]: **G06T 9/00**, H04N 1/41

(86) Numéro de dépôt international:
**PCT/FR00/00081**

(87) Numéro de publication internationale:
**WO 00/042572 (20.07.2000 Gazette 2000/29)**

(54) **CODAGE ET DECODAGE PAR DES SYSTEMES DE FONCTIONS ITEREES (IFS) AVEC DES FONCTIONS DE COLLAGE OSCILLANTE ET UNE FONCTION DE COLLAGE SPATIAL**

KODIERUNG UND DEKODIERUNG MIT ITERIERTEN FUNKTIONENSYSTEMEN (IFS) MIT PERIODISCHEN FUNKTIONEN UND RÄUMLICHER KOLLAGENFUNKTION

CODING AND DECODING BY ITERATED FUNCTION SYSTEMS (IFS) WITH OSCILLATING COLLAGE FUNCTIONS AND A SPATIAL COLLAGE FUNCTION

(84) Etats contractants désignés:
**DE FI GB IT SE**

(30) Priorité: **14.01.1999 FR 9900656**

(43) Date de publication de la demande:
**10.10.2001 Bulletin 2001/41**

(73) Titulaires:
• **FRANCE TELECOM**
**75015 Paris (FR)**
• **TELEDIFFUSION DE FRANCE**
**75732 Paris Cédex 15 (FR)**

(72) Inventeurs:
• **ROBERT, Guillaume**
**F-35235 Thorigne Fouillard (FR)**
• **LAURENT-CHATENET, Nathalie**
**F-35700 Rennes (FR)**

(74) Mandataire: **Vidon, Patrice**
**Le Nobel,**
**2, allée Antoine Becquerel**
**BP 90333**
**35703 Rennes Cedex 7 (FR)**

(56) Documents cités:
**US-A- 4 941 193       US-A- 5 768 437**

• **MONRO D M ET AL: "Deterministic rendering of self-affine fractals" IEE COLLOQUIUM ON 'APPLICATION OF FRACTAL TECHNIQUES IN IMAGE PROCESSING' (DIGEST NO.171), LONDON, UK, 3 DEC. 1990, pages 5/1-4, XP002126177 1990, London, UK, IEE, UK**
• **HAYES M H: "Iterated function systems for image and video coding" INTERNATIONAL WORKSHOP ON IMAGE PROCESSING: THEORY, METHODOLOGY, SYSTEMS AND APPLICATIONS, BUDAPEST, HUNGARY, 20-22 JUNE 1994, vol. 45, pages 11-19, XP002046218 Journal on Communications, May-June 1994, Hungary ISSN: 0866-5583**

EP 1 141 896 B1

## Description

Le domaine de l'invention est celui du codage, et en particulier de la compression du volume d'une image, avec perte d'informations, par exemple en vue de son stockage et/ou de sa transmission.

La notion de compression d'images avec perte est une notion bien connue dans le domaine du traitement de l'image. Le problème principal rencontré est bien sûr celui de l'obtention d'une approximation de l'image originale qui soit la plus fidèle possible, tout en minimisant le volume de l'approximation. Pour exprimer le gain sur un volume de données, on introduit généralement la notion de débit, dont l'unité est le bit par pixel (bpp). Le débit défini donc le rapport entre le nombre pixels de l'image originale et le nombre de bits nécessaires à la reconstruction de son approximation.

L'invention concerne notamment les applications requérant un codage d'images à bas débit (par exemple avec un taux inférieur à 0,3 bpp), telles que des applications sur réseau Internet. Bien sûr, comme cela apparaît par la suite, l'invention peut être appliquée à de nombreux autres domaines techniques.

En effet, l'invention apporte une amélioration importante aux techniques de compression fractale, également appelée compression à base de systèmes de fonctions itérées (IFS). Le principe de compression d'images par la méthode des IFS repose sur l'expression du contenu de l'image au moyen de ce contenu lui-même. Il peut donc être vu comme une auto-quantification de l'image.

La formalisation de la méthode des IFS provient notamment des travaux d'Hutchinson, publiés en 1981 et de ceux de Bransley, Demko et d'autres chercheurs du Georgia Institute of Technology, entre 1985 et 1988. Le premier algorithme automatique appliquant ces principes à la compression des images a été proposé par Jacquin, en 1989. Le principe général de cet algorithme repose sur le partitionnement (découpage) de l'image I à coder en régions destination (également appelé « range »). Ce partitionnement peut être prédéfini, ou dépendre du contenu de l'image. Ensuite, pour chacun des régions destination on effectue les opérations suivantes :

- choix (selon différentes techniques connues) d'une autre région de l'image, de plus grande taille, non nécessairement élément d'une partition, appelé région source (ou "domain");
- détermination de la fonction de collage spatial, dans une famille de fonctions de collage spatial préalablement fixée, qui transforme le support de la région source de manière à la rendre superposable à la région destination considérée.

    S'il n'existe aucune fonction correspondante, on revient à l'étape précédente. Sinon, le résultat de l'application de la fonction de collage spatial identifiée sur la région source est appelé région source décimée ;
- détermination de la fonction de collage massique, dans la famille des fonctions de collage massique préalablement fixée qui transforme le contenu (par exemple la couleur et/ou le niveau de gris et/ou au moins une information photométrique) de la région source décimée de manière à la rendre la plus proche possible de celle de la région destination considéré.

    Si la proximité n'est pas satisfaisante, on reprend à la première étape précédente.

L'ensemble des collages spatiaux et massiques ainsi retenus est appelé IFS. Ces fonctions de collages spatiaux et massiques sont essentiellement des fonctions affines. On appelle généralement fonction de collage le couple formé par la fonction de collage spatial et la fonction de collage massique appliquées à une région source.

Soit $I_R$, une image au contenu quelconque, de même support que l'image I ayant servi à construire l'IFS. Les applications successives de l'IFS à $I_R$ permettent de converger (par exemple en une dizaine d'itérations) vers un « point fixe », qui est une image I' proche de I. Cette propriété est la base du codage d'images par IFS. En effet, il suffit de mémoriser l'IFS afin de caractériser I'.

Tout en conservant le principe général présenté ci-dessus, de nombreuses recherches ont été effectuées afin d'améliorer les performances des premiers codeurs à base d'IFS.

On a notamment proposé de réaliser des partitions adaptatives pour les régions destination. De telles partitions permettent de paver l'image avec de petites régions sur les zones texturées et difficiles à approximer, et de paver l'image avec de grandes régions sur les zones moins riches et plus faciles à approximer.

Une autre avancée est l'hybridation des méthodes IFS avec d'autres méthodes de compression d'images telles que les ondelettes, la quantification vectorielle (QV) ou la décomposition en cosinus discrète (DCT).

Une hybridation IFS-ondelettes consiste en une recherche des similarités entre les sous-bandes d'une décomposition en ondelettes de l'image originale.

Une hybridation IFS-QV considère les IFS comme une auto-quantification de l'image, et cherche à quantifier les régions sources de l'IFS déterminées sur l'image originale.

Enfin, une hybridation IFS-DCT vise par exemple à exprimer les similarités des coefficients des régions destination transformées par DCT avec des régions sources elles aussi transformées par DCT. Une telle hybridation IFS-DCT peut aussi consister à appliquer un calcul d'IFS sur l'image résiduelle d'une reconstruction DCT, ou encore,

EP 1 141 896 B1

inversement, à appliquer une approximation par DCT sur l'image résiduelle d'une reconstruction par IFS.

Ces différentes techniques connues sont relativement efficaces, dans de nombreuses situations. Elles présentent cependant des défauts d'analyse et de synthèse, lorsqu'elles doivent traiter des zones présentant de hautes fréquences et/ou un contenu texturé, en particulier lorsqu'un très bas débit est souhaité.

L'invention a notamment pour objectif de pallier les inconvénients de ces techniques antérieures.

Plus précisément, un objectif de l'invention est de fournir un procédé de codage d'images mettant en oeuvre des IFS, qui soit plus efficace, notamment en terme de qualité visuelle de l'approximation, en particulier pour le traitement des hautes fréquences et des zones texturées, tout en conservant la performance sur les autres zones.

Un autre objectif de l'invention est de fournir un tel procédé de codage qui soit simple à mettre en oeuvre, avec une quantité de calculs raisonnable. Notamment, un objectif de l'invention est de fournir un tel procédé de codage qui puisse bénéficier des avantages des techniques connues citées ci-dessus, en y apportant une scalabilité accrue.

L'invention a également pour objectif de fournir un procédé de décodage correspondant qui puisse être, le cas échéant, paramétrable.

Ces objectifs, ainsi que d'autres qui apparaîtront par la suite, sont atteints à l'aide d'un procédé de codage d'images mettant en oeuvre des systèmes de fonctions itérées (IFS), ledit procédé comprenant les étapes suivantes :

- partitionnement d'une image I à coder en un ensemble de régions d'image, dites régions destination, de forme arbitraire (rectangle, triangle, etc) ;
- association à chacune desdites régions destination D d'une région source correspondante S et d'une fonction de collage w tels que w(S) soit une bonne approximation de ladite région destination D,

ladite fonction de collage se décomposant en :

- une fonction de collage spatial $w_S$, agissant sur la position et/ou la géométrie de ladite région source S, afin de créer une région source décimée $\bar{S}$ (on a : $\bar{S} = w_s(S)$) ; et
- une fonction de collage massique $w_M$, agissant sur le contenu (par exemple la couleur et/ou le niveau de gris et/ou au moins une information photométrique) de ladite région source décimée $\bar{S}$.

Selon l'invention, ladite fonction de collage massique $w_M$ est une fonction oscillante.

L'invention repose donc sur une approche nouvelle, et non évidente, du collage. En effet, quelle que soit la technique utilisée, on a toujours considéré que seules des fonctions polynomiales (celles-ci incluant notamment les fonctions affines) étaient utilisables dans ce contexte.

L'utilisation de fonctions oscillantes permet d'obtenir de bons résultats, en particulier pour le traitement de régions contenant de hautes fréquences. Ainsi, il est possible de reconstruire fidèlement des textures, en évitant l'effet de lissage commun aux techniques IFS connues.

De façon avantageuse, ladite fonction de collage massique $w_M$ est une fonction harmonique, et par exemple une fonction cosinusoïdale.

Dans ce cas, une région source transformée S' = w(S) peut avantageusement être définie par :

$$S'_i = w(S_i) = \sum_{l \in [0:N_c[} \sum_{k \in [0:N_c[} c_{kl} \times \bar{S}_i \times \cos(\theta_l i_x) \times \cos(\theta_k i_y) + b$$

où :

i est l'indice du i-ème pixel de S', de coordonnées $(i_x, i_y)$ ;
$\bar{S}_i$ est l'image de $S_i$ par $w_s$ ;
$\theta$ est un vecteur réel de $R^{N_c}$ tel que $\theta_j = 2\pi/2^j$;
$c_{kl}$ et b sont des coefficients caractérisant la fonction de collage (les coefficients $c_{kl}$ représentant les amplitudes et b représentant le décalage).

Lesdits coefficients $c_{kl}$ et b peuvent alors être déterminés en recherchant les coefficients minimisant une erreur entre source et destination. Cette erreur E s'écrit par exemple :

$$E = \sum_{i \in [0:card(D)[} (S'_i - D_i)^2$$

3

avec : Card(D) : nombre de pixels de D.

Diverses techniques de calcul peuvent être utilisées. En particulier, on peut mettre en oeuvre un système linéaire matriciel, dont les solutions sont déterminées à l'aide d'une des méthodes appartenant au groupe comprenant :

- méthode directe ;
- méthode itérative ;
- méthode de gradient.

Selon un mode de réalisation préférentiel dé l'invention, on met en oeuvre une méthode directe par pivot de Gauss ou par Cholesky.

De façon avantageuse, ladite fonction de collage massique $w_M$ est écrite sous la forme d'une combinaison de fonctions oscillantes, dont le nombre et/ou la fréquence et/ou l'amplitude est paramétrable.

L'invention concerne également un dispositif de codage d'images mettant en oeuvre ce procédé, ainsi que la fonction de collage proprement dite, dans laquelle la fonction de collage massique $w_M$ est une fonction oscillante.

L'invention concerne également le procédé de décodage d'images codées à l'aide du procédé de codage décrit ci-dessus. Selon ce procédé de décodage, on reconstruit lesdites images en effectuant au moins une itération de ladite fonction de collage appliquée à ladite région source S correspondante, ladite fonction de collage massique $w_M$ étant une fonction oscillante.

Selon un mode de réalisation préférentiel de l'invention, la fonction de collage massique appliquée à ladite région source décimée lors du décodage prend en compte un nombre de fonctions oscillantes inférieur et/ou égal à celui pris en compte lors du codage.

Ainsi, il est possible d'effectuer un décodage progressif, et/ou une scalabilité (échelonnabilité) lors du décodage.

L'invention concerne encore les supports de données contenant des images codées selon la technique décrite ci-dessus (seules lesdites régions source S et lesdites fonctions de collage étant stockées sur ledit support de données).

L'invention trouve des applications dans de nombreux domaines, et en particulier dans les domaines appartenant au groupe comprenant les domaines suivants :

- compression d'images fixes ;
- compression (d'images) en mode « intra » dans un codeur vidéo ;
- compression d'images, ou de partie d'images, texturées ;
- réalisation d'agrandissement (zoom) de zones d'images ;
- compression dans des espaces de dimension supérieure à 2.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, qui illustrent, sur un exemple, le principe du codage par IFS :

- la figure 1 présente une image originale à compresser I ;
- la figure 2 illustre la construction d'une partition sur l'image originale de la figure 1 ;
- la figure 3 illustre la recherche, pour une région D fixée de la région S et du collage w qui l'approxime au mieux ;
- la figure 4 illustre la détermination de la fonction de collage W de la figure 3.

L'invention concerne donc une amélioration des techniques à base d'IFS. On rappelle que cette technique, connue en soi, vise à exprimer les auto-similarités d'une image.

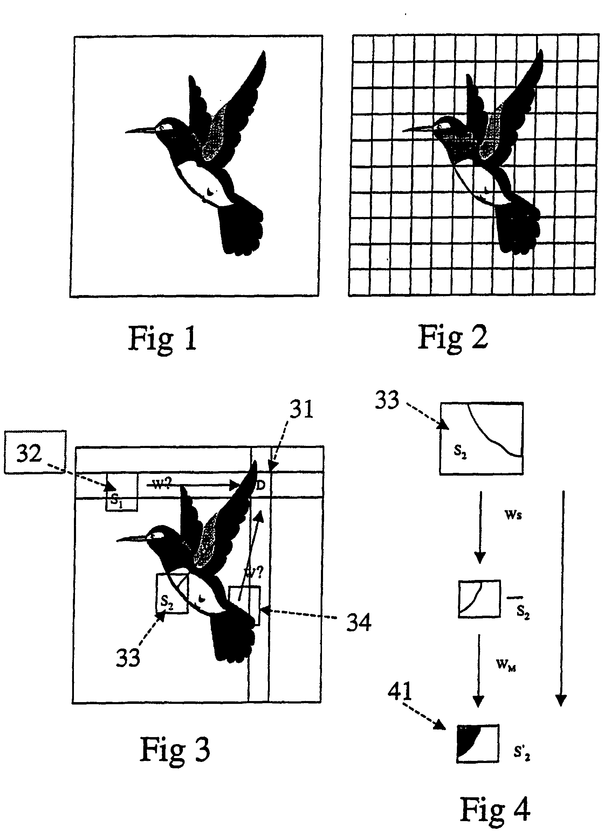

A titre d'exemple, la figure 1 présente une image originale, que l'on désire compresser.

La première étape du traitement consiste à réaliser une partition de l'image originale. Ainsi que cela est illustré par la figure 2, sous la forme de régions, ou blocs, carrés. La partition peut également être effectuée à partir d'un autre motif de base, notamment des triangles. Elle peut également être adaptative, c'est-à-dire tenir compte du contenu de l'image, et notamment de la complexité des différentes parties de cette image.

Ensuite, pour chaque région D 31 de la partition, on recherche la région S (32, 33 ou 34) et le collage w qui l'approximent au mieux, ainsi que cela est illustré en figure 3.

Dans l'exemple illustré, c'est la région $S_2$ 33 qui répond à ce critère.

La figure 4 illustre le principe de la fonction de collage w. Celui-ci comprend tout d'abord un collage spatial $w_s$, qui déplace, décime et oriente la région 33 de façon qu'elle se rapproche géométriquement de la région 31. Ensuite, on détermine la fonction de collage massique $w_M$, qui permet d'obtenir la région 41 $S'_2$, approximant la région 31.

Plus précisément, lorsque l'on considère la région destination D 31, la résolution consiste à caractériser une région source S 33 ainsi qu'une fonction de collage w, tels que w(S) soit une bonne approximation de S. Dans un cas particulier, si l'on note S'=(S) et si la mesure d'erreur considérée est la distance $L_2$, alors l'erreur à minimiser est définie par :

$$E = \sum_{i \in [0:\text{card}(D)[} (S'_i \cdot D_i)^2$$

où $S'_i$ (respectivement $D_i$) est l'intensité du i-ème pixel de S' (respectivement D), et où card(D) est le nombre de pixels de D.

La fonction de collage w se décompose en deux sous-fonctions. La première est le collage spatial $w_s$ qui agit sur la position et la géométrie des régions. Elle transforme la région source en une région décimée $\bar{S}$. La deuxième est le collage massique $w_M$ qui agit sur le contenu des régions. Elle transforme la région source décimée $\bar{S}$ en une région S' approximant au mieux, au sens de l'erreur définie ci-dessus, la région D considérée.

L'invention concerne la nature des collages massiques $w_M$.

Selon les techniques connues, ces opérations de collage massique $w_M$ sont des fonctions polynomiales (celles-ci incluant notamment les fonctions affines). Plus précisément, elles font intervenir deux variables $\alpha$ et $\beta$, appelées facteur d'échelle et facteur de décalage (ou scale et offset).

On a également envisagé d'utiliser des collages massiques polynomiaux ou définis par des arbres de fonction. Mais ces techniques se sont avérées peu efficaces et/ou très complexes, et donc, notamment, non adaptées à la compression d'images en niveaux de gris.

Selon l'invention, on utilise des fonctions de collage massique oscillantes. Dans le mode de réalisation décrit ci-après, à titre d'exemple, on utilise des fonctions de collage cosinusoïdales.

Cette approche permet d'introduire des hautes fréquences dans les collages de l'IFS, lorsque le contenu des régions source n'est pas assez riche. Le collage de l'invention permet l'optimisation conjointe de la caractérisation des régions source et des coefficients associés aux fonctions cosinusoïdales. Ainsi, les régions source apportent les informations basse fréquence, ainsi que les ruptures de pente tel que les contours, que les fonctions cosinusoïdales enrichissent, si la région destination considérée comporte des informations haute fréquence.

Si l'on considère une région destination D et une région source S, on peut déterminer, de façon classique, un collage spatial $w_s$. On appelle l'image $\bar{S}$ l'image de S par $w_s$.

Le contenu de la région source transformée S' approximant D peut s'exprimer, selon l'approche de l'invention, de la façon suivante :

$$S'_{c_i} = w(S_i)$$

$$S'_i = w_M(w_s(S_i))$$

$$S'_{c_i} = w_M(\bar{S}_i)$$

$$S'_i = \sum_{l \in [0:N_c[} \sum_{k \in [0:N_c[} c_{kl} \times \bar{S}_i \times \cos(\theta_l i_x) \times \cos(\theta_k i_y) + b$$

où :

i est l'indice du i-ème pixel de S', de coordonnées $(i_x, i_y)$ ;
$\bar{S}_i$ est l'image de $S_i$ par $w_s$ ;
$\theta_j$ est un vecteur réel de $R^{N_c}$ tel que $\theta_j = 2\pi/2^j$ ;
$c_{kl}$ et b sont des coefficients caractérisant la fonction de collage.

La caractérisation de $w_M$ est réalisée par la détermination des valeurs d'amplitude des cosinus, représentés par une matrice, et du décalage b, représenté par un scalaire.

Ces valeurs doivent minimiser l'erreur de collage E entre S' et D.

L'expression à minimiser est donc la suivante :

$$\min E \;=\; \min \sum_{i\in[0;\text{card}(D)[} (S'_i - D_i)^2$$

Le minimum de cette erreur E, strictement positive, peut être obtenue pour les coefficients $c_{kl}$ et b qui annulent la dérivée de E. Le problème se traduit donc par la résolution du système suivant de $(N_c{}^2 + 1)$ lignes et $(N_c{}^2 + 1)$ inconnues :

$$
\begin{cases}
\dfrac{\partial E}{\partial c_{00}} = 0 \\[6pt]
\dots \\[6pt]
\dfrac{\partial E}{\partial c_{ij}} = 0 \\[6pt]
\dots \\[6pt]
\dfrac{\partial E}{\partial c_{Nc-1;N_c-1}} = 0 \\[6pt]
\dfrac{\partial E}{\partial b} = 0
\end{cases}
$$

Après développement des expressions, ce système peut se réécrire sous la forme d'un système linéaire matriciel :

$$
A\begin{pmatrix}
A_{00}^{00}\dots A_{0N_c-1}^{00}\;A_{10}^{00}\dots A_{N_c0}^{00} \\
\vdots \\
A_{00}^{0N_c} \\
A_{00}^{1N_c} \\
\vdots \\
A_{00}^{N_cN_c}\dots A_{0N_c-1}^{N_cN_c}\;A_{10}^{N_cN_c}\dots A_{N_c0}^{N_cN_c}
\end{pmatrix}
* X
\begin{pmatrix}
c_{00} \\ \vdots \\ \vdots \\ \vdots \\ c_{N_c-1N_c-1} \\ b
\end{pmatrix}
= B
\begin{pmatrix}
B_{00} \\ \vdots \\ \vdots \\ \vdots \\ B_{N_c-1N_c-1} \\ B_{N_c-1N_c}
\end{pmatrix}
$$

Où

$$A \in \mathcal{M}^{N_c^2+1}(\mathfrak{R})$$

est une matrice connue, définie comme suit :

$$\begin{cases} A_{ij}^{kl} = \sum_{m \in [0..card(D)[} \overline{S}_m^2 * \Psi_m^{ij} * \Psi_m^{kl}, \quad \forall\, i \in [0..N_c[\,, j \in [0..N_c[\,, k \in [0..N_c[\,, l \in [0..N_c[ \\[2mm] A_{ij}^{N_c N_c} = \sum_{m \in [0..card(D)[} \overline{S}_m * \Psi_m^{ij}, \quad \forall\, i \in [0..N_c[\,, j \in [0..N_c[ \\[2mm] A_{N_c,0}^{kl} = \sum_{m \in [0..card(D)[} \overline{S}_m * \Psi_m^{kl}, \quad \forall\, k \in [0..N_c[\,, l \in [0..N_c[ \\[2mm] A_{N_c,0}^{N_c N_c} = card(D) \end{cases}$$

En posant $\Psi_m^{ij} = \cos(\theta_i * m_x) * \cos(\theta_j * m_y)$
avec $(m_x; m_y)$ les coordonnées locales du m-ième pixel de D.
Où

$$B \in \Re^{N_c^2 + 1}$$

est un vecteur connu, défini comme suit :

$$\begin{cases} B_{ij} = \sum_{m \in [0..card(D)[} \overline{S}_m * D_m * \Psi_m^{ij} \quad pour\; i \in [0..N_c[ \quad j \in [0..N_c[ \\[2mm] B_{N_c-1 N_c} = \sum_{m \in [0..card(D)[} D_m \end{cases}$$

On peut résoudre ce système par différentes méthodes (méthode directe, méthode itérative, méthode de gradient,...). Notamment, on peut utiliser la méthode du pivot de GAUSS.

De bons résultats de codage sont obtenus avec un nombre très réduit de coefficients. Deux ou trois fonctions oscillantes de base fournissent déjà de bons résultats. Bien sûr, plus ce nombre est important, meilleure est la qualité.

Lors du décodage, il est possible de tenir compte d'un nombre inférieur de fonctions oscillantes. Cela permet de tenir compte de la capacité de traitement du récepteur, ou des besoins de l'utilisateur, mais également d'effectuer un décodage progressif (l'image étant tout d'abord reconstruite avec une qualité moyenne, puis progressivement affinée). Cela permet également d'obtenir une scalabilité (échelonnabilité) lors du décodage.

La technique de l'invention peut être utilisée dans de très nombreux domaines et notamment la compression d'images, en particulier lorsque celle-ci présente quelques parties texturées. L'invention permet également la réalisation de zooms, par modification de la partition au décodage.

L'invention s'applique également au traitement d'images dans des espaces de dimension supérieure à 2 (par exemple en vidéo (2D+t), images virtuelles (3D)). Elle peut également être mise en oeuvre pour des images monodimensionnelles.

**Revendications**

1. Procédé de codage d'images mettant en oeuvre des systèmes de fonctions itérées (IFS), ledit procédé comprenant les étapes suivantes :

   • partitionnement d'une image I à coder en un ensemble de régions d'image, dites régions destination ;
   • association à chacune desdites régions destination D d'une région source correspondante S et d'une fonction de collage w telles que w(S) soit une bonne approximation de ladite région destination D,

   ladite fonction de collage se décomposant en :

   • une fonction de collage spatial $w_S$, agissant sur la position et/ou la géométrie de ladite région source S, afin de créer une région source décimée $\overline{S}$ ; et
   • une fonction de collage massique $w_M$, agissant sur le contenu de ladite région source décimée $\overline{S}$,

**caractérisé en ce que** ladite fonction de collage massique $w_M$ est une fonction oscillante.

2. Procédé de codage d'images selon la revendication 1, **caractérisé en ce que** ladite fonction de collage massique $w_M$ est une fonction harmonique.

3. Procédé de codage d'images selon la revendication 2, **caractérisé en ce que** ladite fonction de collage massique $w_M$ est une fonction cosinusoïdale.

4. Procédé de codage d'images selon la revendication 3, **caractérisé en ce qu'**une région source transformée S' = w(S) est définie par :

$$S'_i = w(S_i) = \sum_{i \in [0;N_o[} \left[ \sum_{k \in [0;N_c[} c_{kl} \times \bar{S}_i \times \cos(\theta_l i_x) \times \cos(\theta_k i_y) + b \right.$$

où :

i est l'indice du i-ème pixel de S', de coordonnées $(i_x, i_y)$ ;
$\bar{S}_i$ est l'image de $S_i$ par $w_s$ ;
$\theta_j$ est un vecteur réel de $R^{Nc}$ tel que $\theta_j = 2\pi/2^j$ ;
$c_{kl}$ et b sont des coefficients caractérisant la fonction de collage

5. Procédé de codage d'images selon la revendication 4, **caractérisé en ce que** lesdits coefficients $c_{kl}$ et b sont déterminés en recherchant les coefficients minimisant une erreur entre source et destination, ladite erreur s'écrivant :

$$E = \sum_{i \in [0;card(D)[} (S'_i - D_i)^2$$

avec : Card(D) : nombre de pixels de D.

6. Procédé de codage d'images selon la revendication 5, **caractérisé en ce qu'**il met en oeuvre un système linéaire matriciel, dont les solutions sont déterminées à l'aide d'une des méthodes appartenant au groupe comprenant :

- méthode directe ;
- méthode itérative ;
- méthode de gradient.

7. Procédé de codage d'images selon la revendication 6, **caractérisé en ce qu'**il met en oeuvre une méthode directe par pivot de Gauss ou par Cholesky.

8. Procédé de codage d'images selon l'une quelconque des revendications 1 à 6, **caractérisé en ce qu'**en ce que ladite fonction de collage massique $w_M$ est écrite sous la forme d'une combinaison de fonctions oscillantes, dont le nombre et/ou la fréquence et/ou l'amplitude est paramétrable.

9. Dispositif de codage d'images mettant en oeuvre des systèmes de fonctions itérées (IFS), comprenant :

• des moyens de partitionnement d'une image I à coder en un ensemble de régions d'image, dites régions destinations D ;
• des moyens d'association à chacune desdites régions destination D d'une région source correspondante S et d'une fonction de collage w telles que w(S) soit une bonne approximation de ladite région destination D ;

ladite fonction de collage se décomposant en :

• une fonction de collage spatial $w_s$, agissant sur la position et/ou la géométrie de ladite région source S, afin de créer une région source décimée $\bar{S}$ ; et

- une fonction de collage massique $w_M$, agissant sur le contenu de ladite région source décimée $\bar{S}$,

**caractérisé en ce que** ladite fonction de collage massique $w_M$ est une fonction oscillante.

10. Procédé de collage, mis en oeuvre dans un procédé de codage et/ou de décodage de données numériques représentatives d'images, mettant en oeuvre des systèmes de fonctions itérées (IFS), ledit procédé de codage et/ou de décodage comprenant les étapes suivantes :

- partitionnement d'une image I à coder en un ensemble de régions d'image, dites régions destination ;
- association à chacune desdites régions destination D d'une région source correspondante S et d'une fonction de collage w telles que w(S) soit une bonne approximation de ladite région destination D,

ledit procédé de collage mettant en oeuvre une fonction de collage se décomposant en:

- une fonction de collage spatial $w_s$, agissant sur la position et/ou la géométrie de ladite région source S, afin de créer une région source décimée $\bar{S}$ ; et
- une fonction de collage massique $w_M$, agissant sur le contenu de ladite région source décimée $\bar{S}$,

**caractérisé en ce que** ladite fonction de collage massique $w_M$ est une fonction oscillante.

11. Procédé de décodage d'images codées à l'aide d'un procédé de codage mettant en oeuvre des systèmes de fonctions itérées (IFS), ledit procédé de codage comprenant les étapes suivantes :

- partitionnement d'une image I à coder en un ensemble de régions d'image, dites régions destination ;
- association à chacune desdites régions destination D d'une région source correspondante S et d'une fonction de collage w telles que w(S) soit une bonne approximation de ladite région destination D,

ladite fonction de collage se décomposant en :

- une fonction de collage spatial $w_s$, agissant sur la position et/ou la géométrie de ladite région source S, afin de créer une région source décimée $\bar{S}$ ; et
- une fonction de collage massique $w_M$, agissant sur le contenu de ladite région source décimée $\bar{S}$,

**caractérisé en ce que** ladite fonction de collage massique $w_M$ est une fonction oscillante,
et **en ce qu'**on reconstruit lesdites images en effectuant au moins une itération de ladite fonction de collage appliquée à ladite région source S correspondante.

12. Procédé de décodage selon la revendication 11, **caractérisé en ce que** la fonction de collage massique appliquée à ladite région source prend en compte un nombre de fonctions oscillantes inférieur ou égal à celui pris en compte lors du codage.

13. Support de données contenant des images codées selon un procédé de codage d'images mettant en oeuvre des systèmes de fonctions itérées (IFS), ledit procédé comprenant les étapes suivantes :

- partitionnement d'une image I à coder en un ensemble de régions d'image, dites régions destination ;
- association à chacune desdites régions destination D d'une région source correspondante S et d'une fonction de collage w telles que w(S) soit une bonne approximation de laditerégion destination D,

ladite fonction de collage se décomposant en :

- une fonction de collage spatial $w_s$, agissant sur la position et/ou la géométrie de ladite région source S, afin de créer une région source décimée $\bar{S}$ ; et
- une fonction de collage massique $w_M$, agissant sur le contenu de ladite région source décimée $\bar{S}$,

seules la position et/ou la géométrie desdites régions source S et desdites fonctions de collage étant stockées sur ledit support de données,
**caractérisé en ce que** ladite fonction de collage massique $w_M$ est une fonction oscillante.

14. Application du procédé selon l'une quelconque des revendications 1 à 8 à au moins un des domaines appartenant au groupe comprenant les domaines suivants :

- compression d'images fixes ;
- compression d'images en mode « intra » dans un codeur vidéo ;
- compression d'images, ou de partie d'images, texturées ;
- réalisation d'agrandissement (zoom) de zones d'images ;
- compression dans des espaces de dimension supérieure à 2.

**Claims**

1. Method for coding images implementing iterated function systems (IFS), the said method comprising the following steps:

   - partitioning an image I to be coded into a set of image regions, referred to as destination regions;
   - associating with each of the said destination regions D a corresponding source region S and a collage function w, which are such that w(S) is a good approximation of the said destination region D,

   the said collage function being divided into:

   - a spatial collage function $w_S$, acting on the position and/or the geometry of the said source region S, in order to create a decimated source region $\bar{S}$; and
   - a mass collage function $w_M$, acting on the content of the said decimated source region $\bar{S}$,

   **characterised in that** the said mass collage function $w_M$ is an oscillating function.

2. Method for coding images according to Claim 1, **characterised in that** the said mass collage function $w_M$ is a harmonic function.

3. Method for coding images according to Claim 2, **characterised in that** the said mass collage function $w_M$ is a cosinusoidal function.

4. Method for coding images according to Claim 3, **characterised in that** a transformed source region S' = w(S) is defined by:

$$S'_i = w(S_i) = \sum_{l \in [0:N_c[} \sum_{k \in [0:N_c[} c_{kl} \times \bar{S}_i \times \cos(\theta_l i_x) \times \cos(\theta_k i_y) + b$$

   where: i is the index of the i-th pixel of S', with coordinates $(i_x, i_y)$;
   $\bar{S}_i$ is the image of $S_i$ under $w_S$;
   $\theta_j$ is a real vector in $R^{Nc}$ such that $\theta_j = 2\pi/2^j$;
   $c_{kl}$ and b are coefficients characterising the collage function.

5. Method for coding images according to Claim 4, **characterised in that** the coefficients $c_{kl}$ and b are determined by looking for the coefficients which minimise an error between source and destination, the said error being written:

$$E = \sum_{i \in [0;card(D)[} (S'_i - D_i)^2$$

   with: Card(D): number of pixels in D.

6. Method for coding images according to Claim 5, **characterised in that** it implements a matricial linear system, the solutions of which are determined with the aid of one of the methods belonging to the group comprising:

- direct method;
- iterative method;
- gradient method.

7. Method for coding images according to Claim 6, **characterised in that** it implements a direct Gaussian-pivot or Cholesky method.

8. Method for coding images according to any one of Claims 1 to 6, **characterised in that** the said mass collage function $w_M$ is written in the form of a combination of oscillating functions, the number and/or the frequency and/or the amplitude of which is parameterisable.

9. Device for coding images implementing iterated function systems (IFS), comprising:

- means for partitioning an image I to be coded into a set of image regions, referred to as destination regions D;
- means for associating with each of the said destination regions D a corresponding source region S and a collage function w, which are such that w(S) is a good approximation of the said destination region D,

the said collage function being divided into:

- a spatial collage function $w_S$, acting on the position and/or the geometry of the said source region S, in order to create a decimated source region $\bar{S}$; and
- a mass collage function $w_M$, acting on the content of the said decimated source region $\bar{S}$,

**characterised in that** the said mass collage function $w_M$ is an oscillating function.

10. Collage method, implemented in a method for coding and/or decoding digital data representing images, implementing iterated function systems (IFS), the said coding and/or decoding method comprising the following steps:

- partitioning an image I to be coded into a set of image regions, referred to as destination regions;
- associating with each of the said destination regions D a corresponding source region S and a collage function w, which are such that w(S) is a good approximation of the said destination region D,

the said collage method implementing a collage function which is divided into:

- a spatial collage function $w_S$, acting on the position and/or the geometry of the said source region S, in order to create a decimated source region $\bar{S}$; and
- a mass collage function $w_M$, acting on the content of the said decimated source region $\bar{S}$,

**characterised in that** the said mass collage function $w_M$ is an oscillating function.

11. Method for decoding images which have been coded with the aid of a coding method implementing iterated function systems (IFS), the said coding method comprising the following steps:

- partitioning an image I to be coded into a set of image regions, referred to as destination regions;
- associating with each of the said destination regions D a corresponding source region S and a collage function w, which are such that w(S) is a good approximation of the said destination region D,

the said collage function being divided into:

- a spatial collage function $w_S$, acting on the position and/or the geometry of the said source region S, in order to create a decimated source region $\bar{S}$; and
- a mass collage function $w_M$, acting on the content of the said decimated source region $\bar{S}$,

**characterised in that** the said mass collage function $w_M$ is an oscillating function,
and **in that** the said images are reconstructed by performing at least one iteration of the said collage function applied to the said corresponding source region S.

12. Decoding method according to Claim 11, **characterised in that** the mass collage function applied to the said source region incorporates a number of oscillating functions less than or equal to that incorporated during the coding.

13. Data medium containing images which have been coded according to a method of coding images implementing iterated function systems (IFS), the said method comprising the following steps:

- partitioning an image I to be coded into a set of image regions, referred to as destination regions;
- associating with each of the said destination regions D a corresponding source region S and a collage function w, which are such that w(S) is a good approximation of the said destination region D,

the said collage function being divided into:

- a spatial collage function $w_S$, acting on the position and/or the geometry of the said source region S, in order to create a decimated source region $\bar{S}$; and
- a mass collage function $w_M$, acting on the content of the said decimated source region $\bar{S}$,

only the position and/or the geometry of the said source regions S and of the said collage functions being stored on the said data medium,

**characterised in that** the said mass collage function $w_M$ is an oscillating function.

14. Application of the method according to any one of Claims 1 to 8 to at least one of the fields belonging to the group comprising the following fields:

- compression of still images;
- compression of images in "intra" mode in a video coder;
- compression of images, or a part of images, which are textured;
- carrying out enlargement (zoom) of sections of images;
- compression in spaces with a dimension greater than 2.

**Patentansprüche**

1. Verfahren zur Bildcodierung, das iterierte Funktionssysteme (IFS) einsetzt, wobei das Verfahren folgende Schritte umfasst:

- Aufteilen eines zu codierenden Bildes I in eine Menge von Bildbereichen, genannt Zielbereiche;

- Verknüpfen eines entsprechenden Quellbereichs S und einer Kollagefunktion w mit jedem der Zielbereiche D, so dass w(S) eine gute Näherung des Zielbereichs D ist,

wobei sich die Kollagefunktion zerlegen lässt in:

- eine räumliche Kollagefunktion $w_S$, die auf die Position und/oder die Geometrie des Quellbereichs S einwirkt, um einen dezimierten Quellbereich (source décimée) $\bar{S}$ zu erstellen; und

- eine Massenkollagefunktion $w_M$, die auf den Inhalt des dezimierten Quellbereichs $\bar{S}$ einwirkt,

**dadurch gekennzeichnet, dass** die Massenkollagefunktion $w_M$ eine oszillierende Funktion ist.

2. Verfahren zur Bildcodierung nach Anspruch 1, **dadurch gekennzeichnet, dass** die Massenkollagefunktion $w_M$ eine periodische Funktion (fonction harmonique) ist.

3. Verfahren zur Bildcodierung nach Anspruch 2, **dadurch gekennzeichnet, dass** die Massenkollagefunktion $w_M$ eine Kosinusfunktion ist.

4. Verfahren zur Bildcodierung nach Anspruch 3, **dadurch gekennzeichnet, dass** ein transformierter Quellbereich S' = w(S) definiert wird durch:

$$S_i^{'} = w(S_i) = \sum_{l \in [0;N_c[} \sum_{k \in [0;Nc[} c_{kl} \times \bar{S}_i \times \cos(\theta_l i_x) \times \cos(\theta_k i_y) + b$$

wobei:

i der Index des i-ten Pixels von S', mit den Koordinaten ($i_x$, $i_y$) ist;

$\bar{S}_i$ die Abbildung von $S_i$ durch $w_s$ ist;

$\theta_j$ ein reeller Vektor von $R^{Nc}$, wie $\theta_j = 2\pi/2^j$, ist;

$c_{kl}$ und b Koeffizienten sind, welche die Kollagefunktion kennzeichnen.

**5.** Verfahren zur Bildcodierung nach Anspruch 4, **dadurch gekennzeichnet, dass** die Koeffizienten $c_{kl}$ und b bestimmt werden, indem man die Koeffizienten sucht, die einen Fehler zwischen Quelle und Ziel minimieren, wobei der Fehler folgendermaßen geschrieben wird:

$$E = \sum_{i \in [0;card(D)[} \left(S_i^{'} - D_i\right)^2$$

wobei:

Card(D): Pixelanzahl von D.

**6.** Verfahren zur Bildcodierung nach Anspruch 5, **dadurch gekennzeichnet, dass** es ein lineares Matrixsystem einsetzt, dessen Lösungen anhand einer der Methoden bestimmt werden, die zu der Gruppe gehören, die folgendes umfasst:

- die direkte Methode (methode directe);

- die iterative Methode;

- die Gradientenmethode.

**7.** Verfahren zur Bildcodierung nach Anspruch 6, **dadurch gekennzeichnet, dass** eine direkte Pivot-Methode nach Gauss oder dem Cholesky-Verfahren verwendet wird.

**8.** Verfahren zur Bildcodierung nach einem der Ansprüche 1 bis 6, **dadurch gekennzeichnet, dass** die Massenkollagefunktion $w_M$ geschrieben wird in der Form einer Kombination aus oszillierenden Funktionen, deren Anzahl und/oder Frequenz und/oder Amplitude parametrierbar ist.

**9.** Vorrichtung zur Bildcodierung, die iterierte Funktionssysteme (IFS) einsetzt, umfassend:

- Mittel zum Aufteilen eines zu codierenden Bildes I in eine Menge von Bildbereichen, genannt Zielbereiche D;
- Mittel zum Verknüpfen eines entsprechenden Quellbereichs S und einer Kollagefunktion w mit jedem der Zielbereiche D, so dass w(S) eine gute Näherung des Zielbereichs D ist,

wobei sich die Kollagefunktion zerlegen lässt in:

- eine räumliche Kollagefunktion $w_S$, die auf die Position und/oder die Geometrie des Quellbereichs S einwirkt, um einen dezimierten Quellbereich $\bar{S}$ zu erstellen; und

- eine Massenkollagefunktion $w_M$, die auf den Inhalt des dezimierten Quellbereichs $\bar{S}$ einwirkt,

**dadurch gekennzeichnet, dass** die Massenkollagefunktion $w_M$ eine oszillierende Funktion ist.

10. Kollageverfahren, eingesetzt in einem Verfahren zum Codieren und/oder Decodieren digitaler Daten, die Bilder darstellen, und wobei das Verfahren iterierte Funktionssysteme (IFS) einsetzt, wobei das Verfahren zum Codieren und/oder Decodieren folgende Schritte umfasst:

- Aufteilen eines zu codierenden Bildes I in eine Menge von Bildbereichen, genannt Zielbereiche;

- Verknüpfen eines entsprechenden Quellbereichs S und einer Kollagefunktion w mit jedem der Zielbereiche D, so dass w(S) eine gute Näherung des Zielbereichs D ist,

wobei das Kollageverfahren eine Kollagefunktion einsetzt, die sich zerlegen lässt in:

- eine räumliche Kollagefunktion $w_S$, die auf die Position und/oder die Geometrie des Quellbereichs S einwirkt, um einen dezimierten Quellbereich $\bar{S}$ zu erstellen; und

- eine Massenkollagefunktion $w_M$, die auf den Inhalt des dezimierten Quellbereichs $\bar{S}$ einwirkt,

**dadurch gekennzeichnet, dass** die Massenkollagefunktion $w_M$ eine oszillierende Funktion ist.

11. Verfahren zur Decodierung von Bildern, die anhand eines Codierverfahrens codiert wurden, das iterierte Funktionssysteme (IFS) einsetzt, wobei das Codierverfahren folgende Schritte umfasst:

- Aufteilen eines zu codierenden Bildes I in eine Menge von Bildbereichen, genannt Zielbereiche;

- Verknüpfen eines entsprechenden Quellbereichs S und einer Kollagefunktion w mit jedem der Zielbereiche D, so dass w(S) eine gute Näherung des Zielbereichs D ist,

wobei sich die Kollagefunktion zerlegen lässt in:

- eine räumliche Kollagefunktion $w_S$, die auf die Position und/oder die Geometrie des Quellbereichs S einwirkt, um einen dezimierten Quellbereich $\bar{S}$ zu erstellen; und
- eine Massenkollagefunktion $w_M$, die auf den Inhalt des dezimierten Quellbereichs $\bar{S}$ einwirkt,

**dadurch gekennzeichnet, dass** die Massenkollagefunktion $w_M$ eine oszillierende Funktion ist, und dass man die Bilder wiederherstellt, indem man mindestens eine Iteration der auf den entsprechenden Quellbereich S angewendeten Kollagefunktion ausführt.

12. Verfahren zur Decodierung nach Anspruch 11, **dadurch gekennzeichnet, dass** die Massenkollagefunktion, die auf den Quellbereich angewendet wird, eine Anzahl von oszillierenden Funktionen berücksichtigt, die kleiner oder gleich der Anzahl ist, die bei der Codierung berücksichtigt wurde.

13. Datenträger, der Bilder enthält, die gemäß einem Bildcodierverfahren codiert wurden, das iterierte Funktionssysteme (IFS) einsetzt, wobei das Verfahren die folgenden Schritte umfasst:

- Aufteilen eines zu codierenden Bildes I in eine Menge von Bildbereichen, genannt Zielbereiche;

- Verknüpfen eines entsprechenden Quellbereichs S und einer Kollagefunktion w mit jedem der Zielbereiche D, so dass w(S) eine gute Näherung des Zielbereichs D ist,

wobei sich die Kollagefunktion zerlegen lässt in:

- eine räumliche Kollagefunktion $w_S$, die auf die Position und/oder die Geometrie des Quellbereichs S einwirkt, um einen dezimierten Quellbereich $\bar{S}$ zu erstellen; und

- eine Massenkollagefunktion $w_M$, die auf den Inhalt des dezimierten Quellbereichs $\bar{S}$ einwirkt,

wobei nur die Position und/oder die Geometrie der Quellbereiche S und der Kollagefunktionen auf dem Datenträger gespeichert werden,
**dadurch gekennzeichnet, dass** die Massenkollagefunktion $w_M$ eine oszillierende Funktion ist.

**EP 1 141 896 B1**

**14.** Anwendung des Verfahrens nach einem der Ansprüche 1 bis 8 auf mindestens einen der Bereiche, die zu der Gruppe gehören, die folgende Bereiche umfasst:

- Komprimieren unbeweglicher Bilder;

- Komprimieren von Bildern im "Intra"-Modus in einem Videocodierer;

- Komprimieren von texturierten Bildern oder Bildabschnitten;

- Durchführen der Vergrößerung (Zoom) von Bildbereichen;

- Komprimieren in Räumen mit mehr als 2 Dimensionen.

**15**

EP 1 141 896 B1

Fig 1

Fig 2

Fig 3

Fig 4

16